# EUROPEAN PATENT SPECIFICATION

(11) **EP 2 582 643 B1**
(45) Date of publication and mention of the grant of the patent: **10.02.2016**
(21) Application number: 11738262.2
(22) Date of filing: 21.06.2011
(51) Int. Cl.: C04B 24/12, C04B 28/04

(54) **GRINDING AID**
MAHLHILFSMITTEL
ADJUVANT DE BROYAGE

(30) Priority: 21.06.2010 GB 201010306
(43) Date of publication of application: 24.04.2013
(73) Proprietor: Fosroc International Limited, London SW3 3QH (GB)
(72) Inventor: MONTECELO, Ivan, E-48200 Bizkaia (ES); VILES, Robert Franklyn, West Midlands B76 9HR (GB); INAMDAR, Madhav, Tumkur Karnataka 572102 (IN)
(74) Representative: Johnson, Yvonne Catherine
(86) International application number: PCT/GB2011/051163
(87) International publication number: WO 2011/161447

(56) References cited:
- WO-A1-2005/054149
- WO-A1-2009/118652
- KATSIOTI M ET AL: "Characterization of various cement grinding aids and their impact on grindability and cement performance", CONSTRUCTION AND BUILDING MATERIALS, ELSEVIER, NETHERLANDS, vol. 23, no. 5, 1 May 2009 (2009-05-01), pages 1954-1959, XP025917349, ISSN: 0950-0618, DOI: 10.1016/J.CONBUILDMAT.2008.09.003 [retrieved on 2008-10-10]

## Description

The present invention relates to the use of methyldiethanolamine as a grinding aid for cement and to methods of grinding cement clinker, and optionally fillers or cement replacements, with methyldiethanolamine, as well as to methods of obtaining cement in which methyldiethanolamine is used as a grinding aid and methods of obtaining concrete and mortar products therefrom.

### Background to the Invention

In the field of cement technology various additives are used at different stages of the manufacturing process to achieve the desired properties and improve the efficiency of the process.

For example, WO 2009/118652 discloses the use of alkanolamines to improve the properties of belite-calcium sulphoaluminate-ferrite cements (BCSAF cements). Additionally, WO 2005/054149 discloses the use of a crude intermediate fermentation broth as an additive or admixture for cementitious compositions. In particular, the crude intermediate fermentation broth is one obtained from the industrial fermentation of glucose-containing starting products and can provide a gluconate-acid-containing additive or admixture for modifying cementitious compositions.

One such known additive for use in cement technology is a grinding aid, which is used during the stage of grinding the cement clinker in a grinding mill. A grinding aid is used to reduce the amount of energy required to grind the clinker and therefore can improve the efficiency of the grinding stage. Grinding aids can also improve the hydration of the clinker, leading to an improved quality product.

The term cement is used in this text to refer to hydraulic cement, such as Portland cement. Portland cement (also known as Ordinary Portland Cement or OPC) may be defined as a cementitious material meeting the requirements of ASTM C150 or the requirements of European Standard EN197.1. The present claimed invention relates solely to cement that comprises Portland cement (also known as Ordinary Portland Cement or OPC).

Portland cement is prepared by heating a mixture of raw components (including calcium carbonate, aluminium silicate, silicon dioxide and miscellaneous iron oxides) to a sintering temperature (usually about 1450°C), resulting in the formation of clinker. Portland cement clinker is formed by the reaction of calcium oxide with acidic components to give primarily tricalcium silicate, dicalcium silicate, tricalcium aluminate, and a ferrite phase "C4AF" (tetracalcium aluminoferrite).

The grinding stage involves grinding this clinker with calcium sulphate (usually in the form of gypsum) in a grinding mill to provide the cement in the form of a fine, homogeneous powder. Other additives or cement replacements can be incorporated before or after the milling process. These additives or cement replacements may be selected from fillers and OPC replacements, such as calcium carbonate and other minerals, ground granulated blast furnace slag, natural pozzolans and pulverised fuel ash (PFA). The components that form the cement powder (clinker, calcium sulphate, and optional additives such as fillers and cement replacements) may be referred to as the cement composition.

Wherever reference is made to "cement" in the present application, this refers to hydraulic cement, such as Ordinary Portland Cement (OPC), which may optionally be a blended cement, i.e. one which comprises one or more fillers or cement replacements. In the context of the invention as claimed invention, the cement clinker as claimed comprises Ordinary Portland Cement clinker.

A well known grinding aid in the art is triethanolamine (TEA). Other materials, such as glycols, (e.g. diethylene glycol (DEG)), triisopropanolamine (TIPA), tetrahydroxyethylethylene diamine (THEED), gluconates and dispersants have also been used. These grinding aid materials are introduced into the mill in small quantities and inter-grind with the clinker.

The present invention has identified a new grinding aid that can provide desirable properties in the end product.

### Summary of the Invention

The present invention provides, in a first aspect, the use of methyldiethanolamine as a grinding aid for cement, the grinding aid being used during the stage of grinding cement clinker in a grinding mill, wherein the cement clinker comprises Ordinary Portland Cement clinker.

Methyldiethanolamine (MDEA) has the chemical formula

CH₃N-(C₂H₄OH)₂ and is known in the art for use as an admixture for accelerating the early hydration time of cement.

Surprisingly, it has been now found that methyldiethanolamine is an effective grinding aid for cement which furthermore gives rise to significant compressive strength enhancement both at an early stage and at a late stage. As is conventional in this art, the compressive strength is measured at timescales determined in terms of number of days after mixing the cement with water and allowing the cement to set, and, unless stated otherwise, early stage strength enhancement refers to measurements taken at 1 and 3 days whilst later stage strength enhancement refers to measurements taken 7 and 28 days.

Early strength is often a problem with blended cements of lower OPC clinker content, for example where the cement composition has a clinker content of 90wt% or less, especially 85wt% or less. In particular, where the cement composition includes one or more fillers or cement replacements at a level of 10wt% or more, such as in a range of from 10 to 50wt%, in addition to clinker and calcium sulphate, the use of the present invention can be highly beneficial in enhancing early stage strength.

It can also be a problem to obtain good early stage strength enhancement whilst also achieving good later stage strength enhancement. Some grinding aids achieve good strength enhancement at one stage but not the other. The present invention permits good strength results to be achieved at both early and late stages.

The present invention therefore is beneficial in a number of ways.

As is conventional for a grinding aid, the methyldiethanolamine can reduce the energy requirements during grinding and provide a uniform free flowing cement powder with reduced tendency to form lumps during storage. It is exemplary in this effect.

Accordingly, the present invention provides methyldiethanolamine for use as a strength enhancing grinding aid for cement, wherein the cement clinker comprises Ordinary Portland Cement clinker, in particular wherein the compressive strength is enhanced at both early stages (e.g. at 1 and/or 3 days) and late stages (e.g. at 7 and/or 28 days).

The present invention also provides methyldiethanolamine for use as a strength enhancing grinding aid for blended cements, wherein the cement clinker comprises Ordinary Portland Cement clinker. such as cement compositions having a content of fillers and/or cement replacements of 10wt% or more. In particular the compressive strength is enhanced at early stages (e.g. at 1 and/or 3 days) by the use of the methyldiethanolamine.

The present application describes, in an unclaimed second aspect, a method of grinding cement clinker, which method comprises the steps of:
- providing cement clinker; and
- intergrinding the cement clinker with a grinding aid comprising methyldiethanolamine.

The present invention provides, in a third aspect, a method of obtaining cement, which method comprises the steps of:
- providing cement clinker; and
- intergrinding the cement clinker with calcium sulphate and a grinding aid comprising methyldiethanolamine, so as to provide a powdered cement; wherein the cement clinker comprises Ordinary Portland Cement clinker

The present invention provides, in a fourth aspect, a method of obtaining a hardened cement, which method comprises the steps of:
- providing cement clinker;
- intergrinding the cement clinker with calcium sulphate and a grinding aid comprising methyldiethanolamine, so as to provide a powdered cement; wherein the cement clinker comprises Ordinary Portland Cement clinker; and
- mixing the powered cement with water, so as to provide a hardened cement.

The present invention provides, in a fifth aspect a method of obtaining concrete or mortar, which method comprises the steps of:
- providing cement clinker;
- intergrinding the cement clinker with calcium sulphate and a grinding aid comprising methyldiethanolamine, so as to provide a powdered cement; wherein the cement clinker comprises Ordinary Portland Cement clinker;
- mixing the powered cement with aggregates (e.g. gravel and/or sand) and water, so as to provide concrete or mortar.

The present invention provides, in a sixth aspect, a ground clinker product comprising cement clinker interground with methyldiethanolamine, wherein the cement clinker comprises Ordinary Portland Cement clinker.

The present invention provides, in a seventh aspect, a cement product comprising cement clinker interground with calcium sulphate and methyldiethanolamine, wherein the cement clinker comprises Ordinary Portland Cement clinker. Thus this may be seen as a product according to the sixth aspect, wherein the product is a cement product and wherein the cement clinker is interground with calcium sulphate and methyldiethanolamine.

The present invention provides, in an eighth aspect, a hardened cement product comprising the cement product of the seventh aspect that has been hardened by mixing with water.

The present invention provides, in a ninth aspect, a concrete or mortar product comprising the cement product of the seventh aspect that has been mixed with aggregates (e.g. gravel and/or sand) and water.

In all aspects of the invention, the cement clinker may optionally be used with one or more fillers or cement replacements. These include natural pozzolans, fly ash (e.g. pulverised fuel ash), slag (e.g. ground granulated blast furnace slag), burnt shale, silica fume and limestone

### Detailed Description of the Invention

The following preferred features apply to each of the aspects of the invention, where appropriate.

The methyldiethanolamine may be provided in the form of a free base. The methyldiethanolamine may, however, optionally be provided in the form of a salt thereof, for example it may be provided in the form of a sulphate, nitrate, chloride, nitrite, phenolate, acetate or gluconate salt. The methyldiethanolamine may also optionally be provided in its ester form, because upon addition to the high pH of a hydrating cement it will undergo hydrolysis and revert back to the alcohol. The methyldiethanolamine may, for example, be provided in the form of an ester of an organic acid, such as a carboxylic acid; preferably a C1-C5 carboxylic acid, more preferably a C1, C2 or C3 carboxylic acid.

The methyldiethanolamine may optionally be used together with other grinding aids and/or other cement additives. Methyldiethanolamine is highly beneficial in that it is compatible with many other compounds and can therefore be used with these compounds to achieve the desired effects in terms of efficiency of the process and/or characteristics of the end product.

In one embodiment, the methyldiethanolamine is used together with one or more (such as two or more, or three or more) other grinding aid. The grinding aids may, for example, be one or more grinding aid selected from: glycols (such as diethylene glycol, triethylene glycol, ethylene glycol, propylene glycol or polyethylene glycol), polyols and esters thereof (e.g. glycerol and monoacetin), gluconates, diethanolisopropanolamine, triisopropanolamine, acetic acid, polycarboxylates, naphthalene sulphonates, lignosulphonates, urea, acetyl urea and diacetyl urea. However, other grinding aids may equally be considered.

The methyldiethanolamine may optionally be used together with other components conventionally used in grinding aids, such as carriers or solvents (e.g. water). De-foaming agents may also optionally be used in order to control the density of the product.

The methyldiethanolamine may suitably be used in amounts known in the art for grinding aids, such as 1000ppm or less, (when considered as a weight of solid product with reference to the total weight of clinker), e.g. 900ppm or less or 800ppm or less; preferably from 5 to 900ppm, such as from 10 to 800ppm, e.g. from 50 to 700ppm, such as from 75 to 600ppm or from 100 to 500ppm or from 150 to 400ppm.

As will be appreciated by the skilled reader, grinding aids are used in lower amounts than other cement additives such as set accelerators (which are used in amounts of over 1000ppm). Further, the grinding aids are added into the grinding mill with the clinker rather than being added to the cement itself. Cement additives such as set accelerators are added as an admixture to powdered cement prior to, together with, or after, the addition of water to harden the cement.

The cement clinker comprises Ordinary Portland cement clinker. In one embodiment it may be a Portland cement clinker containing 1 weight % or more tetracalcium aluminoferrite (C4AF), e.g. containing 2 weight % or more, 3 weight % or more, 4 weight % or more, or 5 weight % or more tetracalcium aluminoferrite (C4AF). In another embodiment it may be a cement clinker containing no, or substantially no, tetracalcium aluminoferrite (C4AF); for example it may contain 0.1 weight % or less tetracalcium aluminoferrite (C4AF), such as 0.05 weight % or less.

The cement clinker comprises Ordinary Portland cement clinker and may optionally be used with one or more fillers or cement replacements. These additional materials may be pre-mixed with the cement clinker or may be added into the grinding equipment before the cement clinker, simultaneously with the cement clinker or after the cement clinker.

The grinding of the clinker may be carried out in any suitable grinding equipment. Grinding mills, such as ball mills or roller mills, (e.g. as described in US 6 213 415) may be mentioned for use in this regard. Combinations of different mill types or of mills with different sized grinding media may also be used.

The methyldiethanolamine may be added into the grinding equipment before the cement clinker, simultaneously with the cement clinker or after the cement clinker. In one embodiment, the methyldiethanolamine and the cement clinker are added into the grinding equipment using a single conveyor.

The methyldiethanolamine may be added into the grinding equipment before the calcium sulphate, simultaneously with the calcium sulphate or after the calcium sulphate.

Any additional grinding aids used with the methyldiethanolamine, as discussed above, may be pre-mixed with the methyldiethanolamine before use, or may be added into the grinding equipment before the methyldiethanolamine, simultaneously with the methyldiethanolamine or after the methyldiethanolamine.

The intergrinding of the cement clinker may be carried out under conventional conditions and for any suitable length of time.

The grinding may suitably be carried out in a closed circuit mill, where the feed and discharge are continuous.

In one embodiment, the temperature during the intergrinding is controlled, e.g. such that there is a mill exit temperature within a few degrees of 115°C, such as from 110 to 120°C. In another embodiment, the mill temperature is not controlled.

The throughput in the grinding mill may suitably be from about 20 to over 200 tons per hour, e.g. from about 20 to 120 tons per hour or more. However, it will be appreciated that this can be selected as required, depending on the size of mill, its design and the fineness of cement that is required.

The intergrinding of the cement clinker may be carried out with any suitable amount of calcium sulphate; for example from 1 to 15wt% of the interground components may be calcium sulphate, such as from 3 to 10wt%.

As is known in the art, small amounts of calcium carbonate and other minerals are often present during the intergrinding. For example, up to 5wt% calcium carbonate and up to 1wt% or more, e.g. up to 5wt%, of other minerals may be present during the intergrinding.

Any optional fillers or cement replacements, e.g. pozzolans, fly ash (such as pulverised fuel ash), or limestone, may be present during the intergrinding. For example, up to 40wt% or more of cement replacements may be present during the intergrinding. In one embodiment, from 0 to 50wt% of cement replacements are present during the intergrinding, such as from 1 to 40wt%.

In one embodiment, it may be that fillers and cement replacements are present in the inter-ground cement composition in an amount of from 1 to 50wt% or from 1 to 45wt% or from 1 to 40wt%; for example they may be present in an amount from 5 to 50wt%, e.g. from 5 to 45 wt% or from 5 to 40wt%, such as from 10 to 40wt%.

The amount of clinker (which, as noted above, will comprise OPC clinker) present in the inter-ground cement composition may be from 40 to 99wt%, such as from 45 to 95wt% or from 50 to 95wt%. In one embodiment, it may be from 40 to 90wt%, e.g. from 45 to 85wt%, or from 50 to 85wt%, or from 55 to 80wt%, or from 60 to 80wt%.

In one embodiment of the invention the cement composition comprises:
- from 1 to 15wt% calcium sulphate, such as from 3 to 10wt%
- from 40 to 99wt% clinker (which, as noted above, will comprise OPC clinker), such as from 50 to 95wt%
- from 0 to 50wt% filler and cement replacements, such as from 1 to 40wt%.

In particular, in one embodiment the cement composition comprises:
- from 1 to 15wt% calcium sulphate, such as from 3 to 10wt%
- from 40 to 90wt% clinker (which, as noted above, will comprise OPC clinker), such as from 50 to 85wt%
- from 5 to 50wt% filler and cement replacements, such as from 10 to 40wt%.

In one embodiment, one or more cement additive is added to the powdered cement that is obtained from the intergrinding. These may, for example, be one or more additive selected from retarders, corrosion inhibiting agents, anti-foaming agents, air entraining agents, water-reducing agents, fluidizers, agents to reduce segregation, set accelerators, anti-freezing agents, cold-resisting agents, shrink reducing agents, heat of hydration inhibitors, alkali aggregate reaction inhibitors, or expansive agents.

In relation to the concrete or mortar product, the ratios of cement product, aggregates (e.g. gravel and/or sand) and water used may be conventional, e.g. in accordance with ASTM C109.

### Examples

### Cement products tested in the Examples 1-3

The examples 1-3 were carried out using Malaysian clinker and grey cement which when tested had elemental compositions as indicated in Table 1.

**Table 1**

| **Elements** | **Malaysian clinker (%)** | **Grey cement clinker (%)** |
|---|---|---|
| SiO₂ | 20.12 | 26.37 |
| Al₂O₃ | 7.06 | 8.93 |
| Fe₂O₃ | 3.75 | 3.93 |
| CaO | 60.56 | 53.33 |
| TiO₂ | Nil | Nil |
| MgO | 1.45 | 0.72 |
| Na₂O | 0.61 | 0.71 |
| K₂O | 0.50 | 0.54 |
| LOI | 2.02 | 3.31 |

### Example 1 - Grinding of Malaysian clinker

4.75 kg of Malaysian clinker (as characterised above) was ground with 0.25kg of gypsum in a laboratory ball mill in the presence of either no grinding aid (control) or in the presence of 0.45g/kg (450ppm) of a grinding aid as set out in Table 2 below.

It can be seen that 1B is a comparative example, using the known grinding agent triethanolamine (TEA). The remaining Examples use methyldiethanolamine (MDEA) in accordance with the invention. Defoamer was used in amounts such that a comparable density was obtained across the Examples, as it is known that density can affect the compressive strength.

**Table 2**

| **Components** | **1A (Invention)** | **1B (Comparative)** | **1C (Invention)** | **1D (Invention)** |
|---|---|---|---|---|
| **MDEA** | 50 | - | 30 | 25 |
| **TEA (85% solution)** | - | 59 | 23.5 | 11.76 |
| **DEG** | - | - | - | 15 |
| **Water** | 49.7 | 41 | 46.2 | 47.94 |
| **Defoamer** | 0.3 | - | 0.3 | 0.3 |

In each case (including the control, with no grinding aid) the grinding was carried out for 40 minutes. The powdered cement thus obtained was then cured with water.

Mechanical strength measurements were carried out on 50 mm cubes of the cured cement thus obtained after 1, 7 and 28 days. In each case three samples were tested and the results averaged.

The calculated average (mean) results are shown in Table 3.

### Results

**Table 3**

| | **Control** | **1A -Invention** | **1B -Comparative** | **1C -Invention** | **1D -Invention** |
|---|---|---|---|---|---|
| Mortar Density | 2.18 | 2.23 | 2.23 | 2.23 | 2.23 |
| **Compressive Strength** | | | | | |
| At 1 day (N/mm²) | 22.08 | 23.87 | 26.36 | 27.30 | 26.64 |
| Variation from control (%) | N/A | 8.1 | 19.4 | 23.6 | 20.7 |
| At 7 days (N/mm²) | 38.77 | 47.93 | 44.21 | 49.03 | 48.45 |
| Variation from control (%) | N/A | 23.6 | 14.0 | 26.5 | 25.0 |
| At 28 days (N/mm²) | 45.84 | 56.90 | 51.63 | 56.80 | 54.30 |
| Variation from control (%) | N/A | 24.1 | 12.6 | 23.9 | 18.5 |

It can be seen that the products using MDEA as grinding aid, either alone or in combination with other known grinding aids, have good improvements in compressive strength, compared to the control, at 1, 7 and 28 days. In other words, the use of MDEA as a grinding aid enhances both early and late stage compressive strength. It can be seen that TEA is beneficial for early strength but less so than MDEA for later strength.

It can be seen that particularly good results are shown at 7 and 28 days for MDEA based grinding aids, as compared to TEA.

### Example 2 - Malaysian clinker with limestone as OPC replacement

Malaysian clinker (as characterised above) was ground with gypsum and limestone in the following weight proportions: clinker = 71%, gypsum = 4%, limestone filler = 25%.

The ground cement was either used directly or mixed with 0.3g/kg (300ppm) of grinding aid. The grinding aid was formulated in the following weight proportions: water 66%, DEG 10%, MDEA 24%.

This test was to assess the extent to which the components of the grinding aid had an impact on the properties of the end product, even if not present during the grinding of the clinker, and also ensured that the effect of particle size was eliminated.

The ground cement products (control and Example) were used to make mortar in accordance with ASTM C109 (cement 500g, sand 1350g and a 0.52 water to cement ratio, to give flow in the range 105 - 115%).

Testing of the concrete products (control and Example) was carried out after 2 days, 7 days and 28 days. In each case two samples were tested and the results averaged.

Results are shown in Table 4.

### Results

**Table 4**

| | | **2 Days** | | **7 days** | | **28 days** | |
|---|---|---|---|---|---|---|---|
| Control | Weight (g) | 282 | 280.5 | 285.5 | 280.5 | 286 | 282 |
| | kN | 37.8 | 39.75 | 62.51 | 66.11 | 89.55 | 85.62 |
| | N/mm² | 15.12 | 15.90 | 25.00 | 26.44 | 35.82 | 34.25 |
| | Average | 15.51 | | 25.72 | | 35.05 | |
| Example | Weight (g) | 280 | 284 | 288 | 283 | 283 | 291 |
| | kN | 46 | 44.97 | 76 | 74.41 | 98.6 | 99.31 |
| | N/mm² | 18.40 | 17.99 | 30.40 | 29.76 | 39.44 | 39.72 |
| | Average | 18.19 | | 30.08 | | 39.58 | |
| | Variation from control (%) | 17.35 | | 16.94 | | 12.98 | |

It can be seen that the concrete product in accordance with the invention shows improved strength at all ages. However, these effects are much less significant than the improvements shown when the MDEA based grinding aid was used as a grinding aid, i.e. present during grinding of the clinker rather than used as an additive to the cement.

### Example 3 - Addition to Grey Cement

A grey cement was made using the following weight proportions: pre-ground grey clinker 600 g, sand 1800 g and water 300 g; the cement clinker had the elemental compositions as indicated in Table 1.

Grinding aids as shown in Table 5 were added to the water, in an amount of 0.45g/kg (450ppm), when preparing the cement.

This test was to assess the extent to which the components of the grinding aid had an impact on the properties of the end product, even if not present during the grinding of the clinker.

**Table 5**

| | **Control** | **3A** | **3B** | **3C** | **3D** | **3E** |
|---|---|---|---|---|---|---|
| MDEA | - | 20 | 30 | 20 | 30 | 25 |
| TEA (85% solution) | - | 35.3 | 23.5 | 17.7 | 11.76 | 11.76 |
| Water | - | 44.4 | 46.2 | 30.14 | 36.66 | 31.04 |
| Defoamer | - | 0.3 | 0.3 | 0.3 | 0.3 | 0.3 |

Mechanical strength measurements were carried out on 50 mm cubes of the cured cement thus obtained after 1, 7 and 28 days. Results are shown in Table 6.

### Results

**Table 6**

| | **Control** | **3A** | **3B** | **3C** | **3D** | **3E** |
|---|---|---|---|---|---|---|
| Mortar Density | 2.23 | 2.24 | 2.22 | 2.21 | 2.23 | 2.22 |
| Compressive strength | | | | | | |
| After 1 day (N/mm²) | 8.47 | 9.05 | 8.54 | 8.59 | 9.10 | 8.64 |
| Variation from control (%) | - | 6.8 | 0.8 | 1.4 | 7.4 | 2.0 |
| After 7 days (N/mm²) | 25.48 | 27.54 | 26.34 | 27.06 | 27.72 | 27.08 |
| Variation from control (%) | - | 8.1 | 3.4 | 6.2 | 8.8 | 6.3 |
| After 28 days (N/mm²) | 37.39 | 40.66 | 39.00 | 40.96 | 39.50 | 40.99 |
| Variation from control (%) | - | 8.7 | 4.3 | 9.5 | 5.6 | 9.6 |

It can be seen that although increases in compressive strength over all ages are exhibited, these are much less significant than the improvements shown when the MDEA based grinding aid was used as a grinding aid, i.e. present during grinding of the clinker rather than used as an additive to the cement.

### Example 4 - Blended cements in plant trial

Blended cements were prepared based on the formulations shown in Table 7. The compositions were ground in the presence of three different grinding aids as set out in Table 8 below.

**Table 7**

| | **A** | **B** | **C** |
|---|---|---|---|
| Cement Composition (wt%) | | | |
| 1. Clinker | 83% | 83% | 83% |
| 2. Gypsum | 4% | 4% | 4% |
| 3. PFA | 8% | 8% | 8% |
| 4. Limestone | 5% | 5% | 5% |
| Dosage of grinding aid (wt%) | 0.09% | 0.09% | 0.07% |

**Table 8**

| **Grinding Aid** | **A (Comparative)** | **B (Comparative)** | **C (Invention)** |
|---|---|---|---|
| | Commercially available grinding aid: containing chloride, TEA, TIPA and glycol | Commercially available grinding aid: containing TEA, TIPA, sulphonated napthalene formaldehyde and polycarboxylate | Water (53.7wt%); sodium lignosulphonate powder (1 wt%); triethanolamine (TEA) 99% conc (12wt%); methyldiethanolamine (MDEA) (25wt%); diethylene glycol (8wt%); tri-n-butyl phosphate (0.3 wt%) |

In each case the grinding was carried out for 40 minutes in a cement plant, with the powdered cement being cured with water.

Mechanical strength measurements were carried out on samples of the cured cement after 1, 2, 7 and 28 days. The results are shown in Table 9.

### Results

**Table 9**

| | **A** | **B** | **C** |
|---|---|---|---|
| Mill production (tons per hour) | 92 | 94 | 102 |
| Blaine (cm²/gm) | 3400 | 3488 | 3460 |
| Residue 45µ (%) | 1.6 | 1.43 | 1.3 |
| SO₃ (%) | 2.7 | 2.6 | 2.6 |
| Mill motor power (kWhr) | 4120 | 4101 | 4230 |
| Power consumption (kWhr/ton) | 44.8 | 43.6 | 41.5 |
| Initial set (min) | 120 | 120 | 110 |
| Final set (min) | 180 | 170 | 150 |
| Normal Consistency (%) | 29.8 | 29.5 | 29.2 |
| Soundness (mm) | 1 | 1 | 1 |
| **Compressive Strength (N/mm²)** | | | |
| 1. 1 day EN | 15.98 | 16.38 | 19.48 |
| 2. 2 days EN | 25.16 | 25.97 | 29.41 |
| 3. 7 days EN | 44.8 | 46.1 | 47.01 |
| 4. 28 days EN | 56.72 | 57.11 | 58.35 |

It can be seen that the grinding aid according to the invention, which includes MDEA, resulted in good early and late stage strength.

In particular, the advantages of high mill throughput and lower power consumption, as well as very good early strength and final strength equivalent to commercially available grinding aids, were observed.

### Example 5 - OPC cements in plant trial

Ordinary Portland Cements were prepared based on the formulations shown in Table 10. The compositions were ground in the presence of two different grinding aids as set out in Table 11 below.

**Table 10**

| | **D** | **C** |
|---|---|---|
| Cement Composition (wt%) | | |
| 1. OPC Clinker | 96% | 96% |
| 2. Gypsum | 4% | 4% |
| Dosage of grinding aid (wt%) | 0.03% | 0.03% |

**Table 11**

| **Grinding Aid** | **D (Comparative)** | **C (Invention)** |
|---|---|---|
| | Water (62wt%); diethylene glycol (10wt%); tri isopropanol amine (TIPA) (28wt%) | Water (53.7wt%); sodium lignosulphonate powder (1 wt%); triethanolamine (TEA) 99% conc (12wt%); methyldiethanolamine (MDEA) (25wt%); diethylene glycol (8wt%); tri-n-butyl phosphate (0.3 wt%) |

In each case the grinding was carried out for 40 minutes in a cement plant, with the powdered cement being cured with water.

Mechanical strength measurements were carried out on samples of the cured cement after 1, 2, 7 and 28 days. The results are shown in Table 12.

### Results

**Table 12**

| | **D** | **C** |
|---|---|---|
| Mill production (tons per hour) | 102 | 107 |
| Blaine (cm²/gm) | 3210 | 3220 |
| Residue 45µ (%) | 8.9 | 7.8 |
| SO₃ (%) | 2.2 | 2.2 |
| Initial set (min) | 125 | 115 |
| Final set (min) | 175 | 170 |
| Normal Consistency (%) | 28.6 | 28 |
| Soundness (mm) | 1 | 1 |
| **Compressive Strength (N/mm²)** | | |
| 1. 1 day EN | 15.25 | 18.3 |
| 2. 2 days EN | 24.4 | 26.35 |
| 3. 7 days EN | 43 | 44.3 |
| 4. 28 days EN | 56.2 | 56.4 |

It can be seen that the grinding aid according to the invention, which includes MDEA, resulted in good early and late stage strength.

In particular, the advantages of high mill throughput, very good early strength and final strength equivalent to a TIPA-based grinding aid, were observed.

## Claims

1. The use of methyldiethanolamine as a grinding aid for cement, the grinding aid being used during the stage of grinding cement clinker in a grinding mill, wherein the cement clinker comprises Ordinary Portland Cement clinker.

2. The use of claim 1 wherein the methyldiethanolamine is used as a strength enhancing grinding aid for cement.

3. The use of claim 2, wherein compressive strength is enhanced by the methyldiethanolamine at both 1 and/or 3 days from the start of hydration and at 7 and/or 28 days from the start of hydration.

4. The use of claim 2 or claim 3, wherein the compressive strength of a blended cement composition is enhanced by the methyldiethanolamine.

5. A method of obtaining cement, which method comprises the steps of:
- providing cement clinker, and optionally one or more fillers or cement replacements;
and
- intergrinding the cement clinker with calcium sulphate and a grinding aid comprising methyldiethanolamine, so as to provide a powdered cement;
wherein the cement clinker comprises Ordinary Portland Cement clinker.

6. A method of obtaining a hardened cement, which method comprises the steps of:
- obtaining a powdered cement by carrying out the method of claim 5; and
- mixing the powered cement with water, so as to provide a hardened cement.

7. A method of obtaining concrete or mortar, which method comprises the steps of:
- obtaining a powdered cement by carrying out the method of claim 5;
- mixing the powered cement with aggregates and water, so as to provide concrete or mortar.

8. The method of any one of claims 5 to 7, wherein:
a) the methyldiethanolamine is provided:
(i) in the form of a free base; or
(ii) in the form of a salt; or
(iii) in the form of an ester;
and/or
b) the methyldiethanolamine is used:
(i) together with one or more other grinding aid; and/or
(ii) in an amount of 900ppm or less, when considered as a weight of solid product with reference to the total weight of clinker.

9. The method of any one of claims 5 to 8, wherein:
(a) the Ordinary Portland Cement clinker is used together with one or more fillers or cement replacements; or
(b) the cement composition comprises from 1 to 15wt% calcium sulphate, from 50 to 95wt% Ordinary Portland Cement clinker, and from 1 to 50wt% filler and cement replacements.

10. A ground clinker product comprising cement clinker interground with methyldiethanolamine, wherein the cement clinker comprises Ordinary Portland Cement clinker.

11. The product of claim 10, wherein the product is a cement product and the product comprises the cement clinker interground with calcium sulphate and methyldiethanolamine.

12. A hardened cement product comprising the cement product as defined in claim 11 that has been hardened by mixing with water.

13. A concrete or mortar product comprising the cement product as defined in claim 11 that that has been mixed with aggregates and water.

14. The product of any one of claims 10 to 13, wherein:
(a) the methyldiethanolamine is provided:
(i) in the form of a free base; or
(ii) in the form of a salt; or
(iii) in the form of an ester;
and/or
(b) the methyldiethanolamine is used:
(i) together with one or more other grinding aid; and/or
(ii) in an amount of 900ppm or less, when considered as a weight of solid product with reference to the total weight of clinker.

15. The product of any one of claims 10 to 14, wherein:
(a) the Ordinary Portland Cement clinker is used together with one or more fillers or cement replacements; or
(b) the cement composition comprises: from 1 to 15wt% calcium sulphate, from 50 to 95wt% Ordinary Portland Cement clinker, and from 1 to 50wt% filler and cement replacements.

## Patentansprüche

1. Die Verwendung von Methyldiethanolamin als Mahlhilfsmittel für Zement, das Mahlhilfsmittel wird dabei im Stadium des Mahlens von Zementklinkern in einer Mahlanlage eingesetzt, wobei der Zementklinker gewöhnlicher Portlandzementklinker ist.

2. Die Verwendung gemäß Anspruch 1, wobei das Methyldiethanolamin als festigkeitserhöhendes Mahlhilfsmittel für Zement eingesetzt wird.

3. Die Verwendung gemäß Anspruch 2, wobei die Druckfestigkeit durch das Methyldiethanolamin sowohl 1 und/oder 3 Tage nach Hydratationsbeginn als auch 7 und/oder 28 Tage nach Hydratationsbeginn erhöht wird.

4. Die Verwendung gemäß Anspruch 2 oder Anspruch 3, wobei die Druckfestigkeit einer gemischten Zementverbindung durch das Methyldiethanolamin erhöht wird.

5. Ein Verfahren zur Gewinnung von Zement, wobei das Verfahren die folgenden Schritte aufweist:
- die Bereitstellung von Zementklinkern, und optional eines oder mehrerer Füllstoffe oder Zementersatzmaterialien;
und
- das Zumahlen zum Zementklinker von Calciumsulfat und einem Mahlhilfsmittel, das Methyldiethanolamin aufweist, um einen pulverförmigen Zement bereitzustellen; wobei der Zementklinker gewöhnlichen Portlandzementklinker aufweist.

6. Ein Verfahren zur Gewinnung von gehärtetem Zement, wobei das Verfahren die folgenden Schritte aufweist:
- die Gewinnung eines pulverförmigen Zements durch Ausführung des Verfahrens in Anspruch 5; und
- die Mischung des pulverförmigen Zements mit Wasser, um einen gehärteten Zement bereitzustellen.

7. Ein Verfahren zur Gewinnung von Beton oder Mörtel, wobei das Verfahren die folgenden Schritte aufweist:
- die Gewinnung eines pulverförmigen Zements durch Ausführung des Verfahrens in Anspruch 5;
- die Mischung des pulverförmigen Zements mit Zuschlagstoffen und Wasser, um einen Beton oder Mörtel bereitzustellen.

8. Das Verfahren in einem der Ansprüche 5 bis 7, wobei:
(a) das Methyldiethanolamin als Folgendes vorliegt:
(i) in der Form einer freien Base; oder
(ii) in der Form eines Salzes; oder
(iii) in der Form eines Esters;
und/oder
(b) wobei das Methyldiethanolamin als Folgendes verwendet wird:
(i) zusammen mit einem oder mehreren weiteren Mahlhilfsmitteln; und/oder
(ii) in einer Menge von 900ppm oder weniger, wenn es als Gewicht eines festen Produkts in Bezug auf das Gesamtgewicht des Klinkers betrachtet wird.

9. Das Verfahren in einem der Ansprüche 5 bis 8, wobei:
(a) der gewöhnliche Portlandzementklinker zusammen mit einem oder mehreren Füllmitteln oder Zementersatzmaterialien verwendet wird; oder
(b) die Zementzusammensetzung zwischen 1 und 15 Gew.-% Calciumsulfat, zwischen 50 und 95 Gew.-% gewöhnlichen Portlandzementklinker und zwischen 1 und 50 Gew.-% Füllmittel und Zementersatzmaterialien aufweist.

10. Ein gemahlenes Klinkerprodukt mit Zementklinker und Methyldiethanolamin-Zumahlung, wobei der Zementklinker gewöhnlichen Portlandzementklinker aufweist.

11. Das Produkt in Anspruch 10, wobei das Produkt ein Zementprodukt ist und das Produkt Zementklinker mit Zumahlung von Calciumsulfat und Methyldiethanolamin aufweist.

12. Ein gehärtetes Zementprodukt, das das Zementprodukt wie in Anspruch 11 definiert aufweist und durch Mischen mit Wasser gehärtet wurde.

13. Ein Beton- oder Mörtelprodukt, das das Zementprodukt wie in Anspruch 11 definiert aufweist und mit Zuschlagstoffen und Wasser gemischt wurde.

14. Das Produkt gemäß eines der Ansprüche 10 bis 13, wobei:
(a) das Methyldiethanolamin als Folgendes vorliegt:
(i) in der Form einer freien Base; oder
(ii) in der Form eines Salzes; oder
(iii) in der Form eines Esters;
und/oder
(b) wobei das Methyldiethanolamin als Folgendes verwendet wird:
(i) zusammen mit einem oder mehreren weiteren Mahlhilfsmitteln; und/oder
(ii) in einer Menge von 900ppm oder weniger, wenn es als Gewicht eines festen Produkts in Bezug auf das Gesamtgewicht des Klinkers betrachtet wird.

15. Das Produkt in einem der Ansprüche 10 bis 14, wobei:
(a) der gewöhnliche Portlandzementklinker zusammen mit einem oder mehreren Füllmitteln oder Zementersatzmaterialien verwendet wird; oder
(b) die Zementzusammensetzung zwischen 1 und 15 Gew.-% Calciumsulfat, zwischen 50 und 95 Gew.-% gewöhnlichen Portlandzementklinker und zwischen 1 und 50 Gew.-% Füllmittel und Zementersatzmaterialien aufweist.

## Revendications

1. L'utilisation de méthyldiéthanolamine en tant qu'adjuvant de broyage pour le ciment, l'adjuvant de broyage étant utilisé au cours de l'étape de broyage de mâchefer de ciment dans un broyeur, où le mâchefer de ciment contient du mâchefer de ciment Portland normal.

2. L'utilisation selon la Revendication 1 où la méthyldiéthanolamine est utilisée en tant que adjuvant de broyage pour le ciment en vue d'une amélioration de la résistance.

3. L'utilisation selon la Revendication 2, où la résistance à la compression est améliorée par le méthyldiéthanolamine à la fois à 1 et/ou 3 jours à partir du début de l'hydratation et à 7 et/ou 28 jours à partir du début de l'hydratation.

4. L'utilisation selon la Revendication 2 ou 3, où la résistance à la compression d'une composition de ciment mélangée est améliorée par la méthyldiéthanolamine.

5. Un procédé d'obtention de ciment, ledit procédé comprenant les opérations suivantes :
- la fourniture de mâchefer de ciment, et éventuellement d'une ou de plusieurs charges ou substituts de ciment,
et
- l'interbroyage du mâchefer de ciment avec du sulfate de calcium et un adjuvant de broyage contenant de la méthyldiéthanolamine, de façon à fournir un ciment en poudre,
où le mâchefer de ciment contient du mâchefer de ciment Portland normal.

6. Un procédé d'obtention d'un ciment durci, ledit procédé comprenant les opérations suivantes :
- l'obtention d'un ciment en poudre par l'exécution du procédé selon la Revendication 5, et
- le mélange de ciment en poudre avec de l'eau de façon à fournir un ciment durci.

7. Un procédé d'obtention de béton ou de mortier, ledit procédé comprenant les opérations suivantes :
- l'obtention d'un ciment en poudre par l'exécution du procédé selon la Revendication 5,
- le mélange du ciment en poudre avec des agrégats et de l'eau de façon à fournir du béton ou du mortier.

8. Le procédé selon l'une quelconque des Revendications 5 à 7, où :
(a) la méthyldiéthanolamine est fournie :
(i) sous la forme d'une base libre, ou
(ii) sous la forme d'un sel, ou
(iii) sous la forme d'un ester,
et/ou
(b) la méthyldiéthanolamine est utilisée :
(i) conjointement avec un ou plusieurs autres adjuvants de broyage, et/ou
(ii) dans une quantité de 900 ppm ou moins lorsque considérée en tant que poids de produit solide en faisant référence au poids total de mâchefer.

9. Le procédé selon l'une quelconque des Revendications 5 à 8, où :
(a) le mâchefer de ciment Portland normal est utilisé conjointement avec une ou plusieurs charges ou substituts de ciment, ou
(b) la composition de ciment contient de 1 à 15% en poids de sulfate de calcium, de 50 à 95% en poids de mâchefer de ciment Portland normal et de 1 à 50% en poids de charges et substituts de ciment.

10. Un produit de mâchefer broyé contenant du mâchefer de ciment interbroyé avec de la méthyldiéthanolamine, où le mâchefer de ciment contient du mâchefer de ciment Portland normal.

11. Le produit selon la Revendication 10, où le produit est un produit de ciment et le produit contient le mâchefer de ciment interbroyé avec du sulfate de calcium et de la méthyldiéthanolamine.

12. Un produit de ciment durci contenant le produit de ciment selon la Revendication 11 qui a été durci par un mélange avec de l'eau.

13. Un produit de béton ou de mortier contenant le produit de ciment selon la Revendication 11 qui a été mélangé avec des agrégats et de l'eau.

14. Le produit selon l'une quelconque des Revendications 10 à 13, où :
(a) la méthyldiéthanolamine est fournie :
(i) sous la forme d'une base libre, ou
(ii) sous la forme d'un sel, ou
(iii) sous la forme d'un ester,
et/ou
(b) la méthyldiéthanolamine est utilisée :
(i) conjointement avec un ou plusieurs autres adjuvants de broyage, et/ou
(ii) dans une quantité de 900 ppm ou moins lorsque considérée en tant que poids de produit solide en faisant référence au poids total de mâchefer.

15. Le produit selon l'une quelconque des Revendications 10 à 14, où :
(a) le mâchefer de ciment Portland normal est utilisé conjointement avec une ou plusieurs charges ou substituts de ciment, ou
(b) la composition de ciment contient : de 1 à 15% en poids de sulfate de calcium, de 50 à 95% en poids de mâchefer de ciment Portland normal et de 1 à 50% en poids de charges et substituts de ciment.
